# EUROPEAN PATENT APPLICATION

(11) **EP 0 999 109 A2**
(43) Date of publication of application: **10.05.2000**
(21) Application number: 99308514.1
(22) Date of filing: 27.10.1999
(51) Int. Cl.: B60T 17/02, B60T 13/46, B60T 13/52

(54) **A motor vehicle vacuum assisted braking system**

(30) Priority: 06.11.1998 GB 9824315
(71) Applicant: ROVER GROUP LIMITED, Warwick, Warwickshire CV34 6RG (GB)
(72) Inventor: Basnett, Michael Neil, Crickhowell, Powys NP8 1DS (GB)
(74) Representative: Wilson, Alan Stuart

(57) **Abstract**

A motor vehicle vacuum assisted braking system 10 is disclosed having means to ensure that the vacuum pump 20 evacuates a vacuum actuator 11 associated with a hydraulic master cylinder 12 in preference to a larger volume vacuum reservoir 18, until the vacuum in the actuator reaches a sufficient level.

## Description

This invention relates to motor vehicles and in particular to vacuum assisted braking systems for motor vehicles.

It is well known to provide a vacuum assisted braking system for a motor vehicle having a vacuum actuator combined with a hydraulic master cylinder to provide fluid at pressure to one or more hydraulically actuated braking means such as disc brakes or drum brakes.

Such combined vacuum actuators and master cylinders are well known and are of varying construction, see for example, US Patent numbers 5,207,770, EP-A-0573233 and WO-A-9420343.

All of these assemblies have a vacuum chamber and a high pressure chamber, the pressure differential between which is used to assist with the application of a force from a manually operated brake pedal connected to the master cylinder by a push rod.

Such systems normally derive the requisite vacuum from the inlet manifold of the engine fitted to the motor vehicle. However, it has recently been found necessary due to the lower vacuum available in modern engines, particularly diesel engines, to provide the vacuum for the vacuum actuator from a pump. Such pump energised systems usually employ a small pump to minimize energy consumption and a reservoir to ensure that sudden vacuum needs of the vacuum actuator can be met. The reservoir can also help to ensure that the vehicle can be brought safely to a halt should the pump fail. The volume of the reservoir is normally between five and fifteen times that of the vacuum chamber in the vacuum actuator to allow the brakes to be applied at least five times before servo assistance begins to be lost.

It is a problem with such a system that the relatively large volume of the reservoir takes several minutes to evacuate using a small displacement pump of the type normally fitted and this can result in the available vacuum being minimal for the first few minutes after start-up.

It is an object of this invention to overcome the problems associated with the prior art.

According to the invention there is provided a motor vehicle vacuum assisted braking system comprising a vacuum actuator combined with a hydraulic master cylinder to provide fluid at pressure to one or more hydraulically actuated braking means, a vacuum reservoir, a vacuum generating means for producing reduced air pressure and a control means to control the flow of air between the vacuum generating means, the vacuum actuator and the vacuum reservoir, wherein the control means is arranged under certain conditions to isolate the vacuum reservoir from the vacuum generating means whilst the vacuum actuator is connected to the vacuum generating means.

The invention will now be described by way of example with reference to the accompanying drawing of which:-
Figure 1 is a schematic representation of a vacuum assisted braking system according to the invention;
Figure 2 is a cross-section through a control valve forming part of a braking system according to the invention showing the valve in a first operable position;
Figure 3 is a cross-section through a control valve forming part of a braking system according to the invention showing the valve in a second operable position; and
Figure 4 is a cross-section through a control valve forming part of a braking system according to the invention showing the valve in a third operable position.

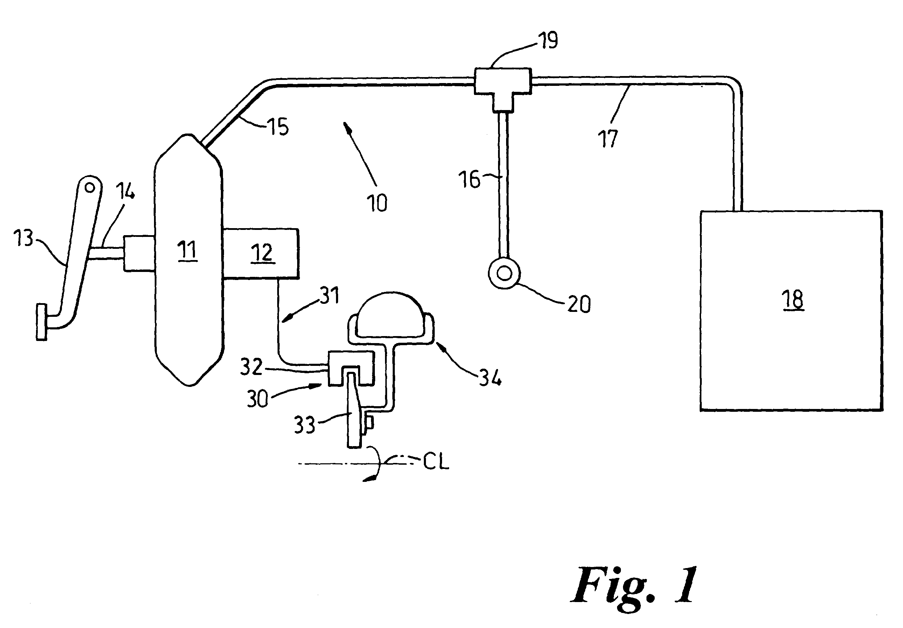

With reference to Figure 1 a motor vehicle vacuum assisted braking system 10 comprises a vacuum actuator 11, a hydraulic master cylinder 12, a vacuum reservoir 18, a vacuum generating means in the form of a rotary electric vacuum pump 20, and a control means in the form of a valve assembly 19 to distribute the output from the pump 20 between the vacuum actuator 11 and the reservoir 18.

The vacuum actuator 11 and the hydraulic master cylinder 12 are formed as one assembly and have a driver controllable input in the form of a push rod 14 acted upon by a brake pedal 13.

The master cylinder 12 is connected to a braking means 30 by a hydraulic high pressure conduit 31. The braking means comprises a brake disc calliper 32 and a brake disc 33 derivable connected to a road wheel 34 of the motor vehicle.

The valve assembly 19 is arranged to give preferential treatment to the vacuum actuator 11 to ensure that this is evacuated to the lowest possible pressure before evacuation of the vacuum reservoir 18 can take place. This ensures that the maximum servo effect can be provided from the vacuum actuator 11 at all times.

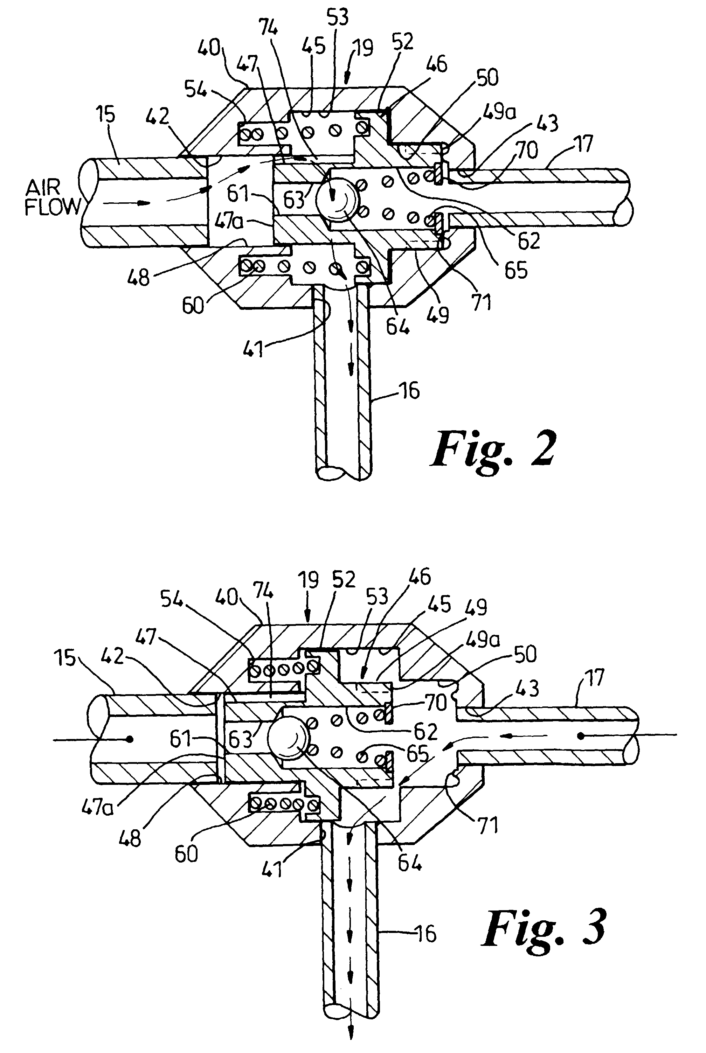

With reference to Figures 2 to 4 the valve assembly 19 has a body 40 which defines a pump port 41, an actuator port 42, a reservoir port 43 and a valve chamber 45. The pump port 41 is connected to the vacuum pump 20 by a hose 16. The actuator port 42 is connected to the vacuum actuator 11 by means of a hose 15 and the reservoir port 43 is connected to the vacuum reservoir 18 by a hose 17.

A valve member 46 is slidably supported in the valve chamber 45. It has a first tubular end portion 47 at one end engaged in a cylindrical bore 48 which defines the actuator port 42, and a second tubular end portion 49 engaged in a further cylindrical bore 50 which connects the valve chamber 45 to the reservoir port 43.

The two tubular end portions 47, 49 have respective annular end faces 47a, 49a used to control the position of the valve member 46. Between them is formed a flange 52 slidingly engaged with a cylindrical wall 53 defining a central part of the valve chamber 45. A spring 60 is interposed between the flange 52 and an end wall 54 of the valve chamber 45 to bias the valve member 46 towards the reservoir port 43.

The valve member 46 has a stepped bore 61 extending through it having a large diameter portion 62 extending through the second tubular end portion 49 and a small diameter portion 63 extending through the first tubular end portion 47. A ball 64 located in the large diameter portion 62 is biased towards the small diameter portion 63 by a spring 65 to form a one-way valve between the actuator port 42 and the reservoir port 43, operable to allow to air to flow from the actuator port 42 to the reservoir port 43 whenever the air pressure in the actuator vacuum chamber is a predetermined amount higher than that in the vacuum reservoir 18, but preventing flow in the opposite direction.

Operation of the system is as follows. When the vehicle is started up and pressure in the system is at or near atmospheric then the valve member 46 adopts the position shown in Figure 2. This is because the combined force due to the pressure exerted upon the valve member 46 by the air pressure at the actuator port 42 and the force applied by the spring 60 is greater than the force produced by the pressure in the reservoir 18. The annular end face 49a of the valve member 46 facing the reservoir port 43 is in sealing engagement with an annular abutment 71 on the valve body 40 thereby preventing air from passing between the valve member 46 and the cylindrical bore 50. Therefore, no connection is provided between the pump 20 and the reservoir 18 which is sealed off. However, air can be drawn by the pump 20 from the vacuum actuator 11 and the hose 15 due to the presence of a groove 74 in the outer surface of the first tubular end portion 47.

This process of evacuation of the vacuum actuator 11 will continue until the pressure differential between the vacuum actuator 11 and the reservoir 18 rises to a predetermined level. At this point the pressure in the reservoir 18 acting on the valve member 46 on the reservoir port side is greater than the combined force due to the pressure in the actuator acting on the valve member 46 on the actuator port side and the force applied by the spring 60. The valve member 46 will then move to the position shown in Figure 3 in which the reservoir 18 is directly connected to the pump 20, and the actuator 11 is in communication with the reservoir 18 through the check valve 64.

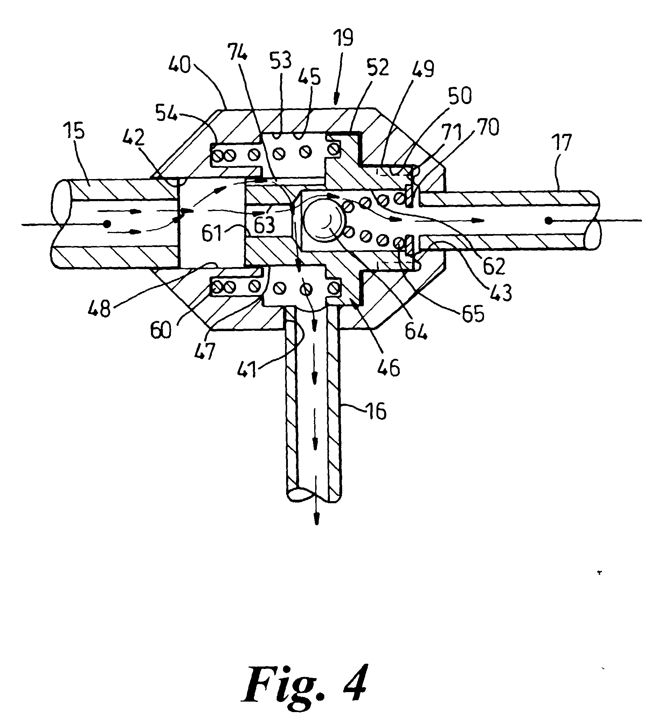

As the pressure in the reservoir 18 is reduced by the pump 20 towards that in the actuator 11 the force balance will once again change due to the presence of the spring 60 thereby causing the valve member 46 to move back to the position shown in Figure 4.

In this position air is drawn out of the vacuum actuator 11 by the pump 20 but not from the reservoir 18. This means that the pump 20 only has to maintain the relatively small volume of the vacuum actuator 11 and the hose 15 evacuated and not the large volume of the reservoir 18.

However, if the vacuum in the vacuum actuator 11 is depleted causing the pressure to rise it will cause the ball 64 to move away from the small diameter bore 63 thereby allowing air to be sucked from the vacuum actuator 11 by the reservoir 18 which is at a lower pressure. In effect this means that the effective volume of the vacuum actuator 11 also includes the volume of the reservoir 18 thereby allowing many of the operations of the master cylinder 12 even when the pump 20 is not operating. Subsequently the pressure in the reservoir will rise as it replenishes the vacuum in the actuator 11 through the ball valve 64, but only when the pressure in the actuator 11 is sufficiently lower than that in the reservoir 18 will the valve member 46 temporarily return to the Figure 3 position to allow the pump 20 to evacuate the reservoir.

By ensuring that the vacuum actuator 11 retains exclusive access to the pump 20 unless its pressure is a predetermined amount lower than that in the reservoir 18, the speed with which the pressure in the vacuum actuator 11 can be reduced is greatly shortened.

Although the invention has been described with particular reference to a preferred embodiment it will be appreciated that alternative arrangements could be employed to produce the same effect. For example, the ball check valve described above could be replaced by a rubber disc valve.

It will also be appreciated that the same effect could be produced by using a control means in the form of a solenoid actuated valve and an electronic control unit in place of the valve 19. The system could then include a means of measuring the pressure in the vacuum actuator and the reservoir, and the pressure differential could be used to control the solenoid valve to give exactly the same functionality as in the embodiment described above. Alternatively just one pressure sensor could be used in the vacuum actuator and the actuator given exclusive access to the pump whenever the pressure in its vacuum chamber was above a predetermined level. In fact it will be appreciated that with an electronically controlled system, and indeed with a mechanical pressure actuated valve, the operation of the system can be varied in several ways to achieve various modes of operation.

Although the invention has been described with reference to a system employing a small vacuum pump to evacuate the vacuum actuator it is equally applicable to situations in which the available vacuum from an inlet manifold of an engine is low so that a reservoir is necessary to ensure safe operation under all operating conditions.

## Claims

1. A motor vehicle vacuum assisted braking system comprising a vacuum actuator (11) combined with a hydraulic master cylinder (12) to provide fluid at pressure to one or more hydraulically actuated braking means (30), a vacuum reservoir (18) a vacuum generating means (20) for producing reduced air pressure and a control means (19) to control the flow of air between the vacuum generating means, the vacuum actuator and the vacuum reservoir, characterized in that the control means (19) is arranged under certain conditions to isolate the vacuum reservoir (18) from the vacuum generating means (20) whilst the vacuum actuator (11) is connected to the vacuum generating means (20).

2. A system according to claim 1 characterized in that the control means (19) is arranged to isolate the reservoir (18) from the vacuum generating means (20) unless the pressure in the vacuum actuator (11) is a predetermined amount lower than that in the vacuum reservoir.

3. A system according to claim 1 characterized in that the control means (19) is arranged to isolate the reservoir (18) from the vacuum generating means (20) unless the pressure in the vacuum actuator (11) is below a predetermined level.

4. A braking system as claimed in any of claims 1 to 3 characterized in that the control means is a valve assembly (19) having a valve member (46) moveable by differential pressure.

5. A braking system as claimed in claim 4 characterized in that the valve assembly (19) has a first port (41) connected to the vacuum generating means (20), a second port (42) connected to the vacuum actuator (11) and a third port (43) connected to the vacuum reservoir (18).

6. A braking system as claimed in claim 4 or claim 5 characterized in that the valve member (46) has a first face (47a) exposed to the pressure in the vacuum actuator (11) and a second face (49a) exposed to the pressure in the vacuum reservoir (18) so that the pressures in the vacuum actuator and the vacuum reservoir control movement of the valve member.

7. A braking system as claimed in claim 6 characterized in that the valve member (46) is biased by a spring (60) towards a position in which it isolates the third port (43) from the first port (41).

8. A braking system as claimed in claim 7 characterized in that the valve member (46) is moved against the action of the spring (60) to connect the third port (43) to the first port (41) when the differential pressure acting on the two faces (47a, 49a) is sufficient to overcome the biasing effect of the spring (60).

9. A braking system as claimed in any one of claims 1 to 8 characterized in that the vacuum generating means is a vacuum pump.
